**Europäisches Patentamt**

**European Patent Office**

**Office européen des brevets**

(11) Veröffentlichungsnummer: **0 307 709**
**B1**

(12) # EUROPÄISCHE PATENTSCHRIFT

(45) Veröffentlichungstag der Patentschrift:
31.10.90

(51) Int. Cl.⁵: **H02K 23/66**, H02K 11/00

(21) Anmeldenummer: 88114081.8

(22) Anmeldetag: 29.08.88

(54) Dreherkennungs- und/oder Drehzahlerfassungsvorrichtung für einen elektrisch- bzw. permanentmagnetisch erregten Gleichstrom-Kleinmotor.

(30) Priorität: 11.09.87 DE 3730607

(43) Veröffentlichungstag der Anmeldung:
22.03.89 Patentblatt 89/12

(45) Bekanntmachung des Hinweises auf die Patenterteilung:
31.10.90 Patentblatt 90/44

(84) Benannte Vertragsstaaten:
DE FR GB IT

(56) Entgegenhaltungen:
DE-A- 2 531 434
DE-U- 8 701 312
GB-A- 2 039 420
US-A- 4 082 968

PATENT ABSTRACTS OF JAPAN, Band 10,
Nr. 213 (E-422)[2269], 25. Juli 1986; &
JP-A-61 52 126 (MATSUSHITA ELECTRIC IND. CO.
LTD) 14-03-1986
PATENT ABSTRACTS OF JAPAN, Band 9,
Nr. 295 (E-360)[2018], 21. November 1985; &
JP-A-60 134 748 (MATSUSHITA DENKO K.K.) 18-07-1985

(73) Patentinhaber: Siemens Aktiengesellschaft,
Wittelsbacherplatz 2, D-8000 München 2(DE)

(72) Erfinder: Müller, Hans-Joachim, Dipl.-Ing. (FH),
Schweinfurter Strasse 80, D-8722 Bergrheinfeld(DE)
Erfinder: Winter, Udo, Dr., Heinrich-Lübke-Strasse 19,
D-8702 Kürnach(DE)
Erfinder: Seuffert, Werner, Mainstrasse 9,
D-8722 Bergrheinfeld(DE)

## Beschreibung

Dreherkennungs- und/oder Drehzahlerfassungsvorrichtung in einem permanentmagnetisch erregten Gleichstrom-Kleinmotor.

Die Erfindung bezieht sich auf eine Dreherkennungs- und/oder Drehzahlerfassungsvorrichtung in einem permanentmagnetisch erregten Gleichstrom-Kleinmotor gemäß Oberbegriff des Anspruchs 1 bzw. des Anspruches 2; ein permanentmagnetisch erregter Gleichstrom-Kleinmotor der vorgenannten Art ist z.B. aus der US-A 4 082 968 bekannt.

Im bekannten Fall der US-A 4 082 968 wird ein stiftförmiger Tragkörper mit an seinem einen Ende gehalterter Meßspule in eine Öffnung am Umfang des kreisförmigen Statorgehäuses radial eingeführt und über ein an seinem anderen Ende eingeformtes Gewinde in der Öffnung festgeschraubt.

Durch die GB-A 2 039 420 ist es bekannt, bei einem Elektromotor mit bewickelten Statoreinzelpolen zur Festlegung der Wicklung in den Pollücken Distanzstücke anzuordnen, die sich aufgrund ihrer konstruktiven Elastizität den verschiedenen Wicklungsausladungen anpassen können; u.a. sind in den Distanzstücken Taschen bzw. Hohlräume vorgesehen, die auch zur Aufnahme von elektronischen Bauteilen, insbesondere Thermowächtern, dienen sollen. Aufgrund ihrer Funktion und konstruktiven Ausgestaltung ist davon auszugehen, daß die Distanzstücke ausschließlich von radial innen zwischen die Wicklungen benachbarter Stator-Einzelpole einzustecken sind.

Durch das DE-U 8 701 312 ist es weiterhin bekannt, bei einem Elektromotor mit bewickelten Einzelpolen zur betriebssicheren Halterung eines Thermowächters diesen zwischen axialen Versteifungsrippen eines die Pollücken zwischen den Einzelpolen verschließenden Abdeckteiles anzuordnen; die Art und Weise der Montage bzw. Halterung des Abdeckteiles zwischen den bewickelten Einzelpolen wird nicht beschrieben.

Gemäß Aufgabe vorliegender Erfindung soll bei einem Kleinmotor der vorgenannten Art auf einfache und auch bei rauhem Betriebseinsatz sichere Weise die Meßspule in den Pollücken zwischen den Magnetsegmenten anbringbar und einer nachfolgenden Auswerte- und/oder Regelschaltung zuführbar sein.

Die Lösung der vorgenannten Aufgabe ist bei einem Gleichstrom-Kleinmotor der eingangs genannten Art erfindungsgemäß durch die Lehre des Anspruchs 1 bzw. des Anspruchs 2 möglich; vorteilhafte Ausgestaltungen der Erfindung sind jeweils Gegenstand der Unteransprüche.

Ausgehend von der Erkenntnis, daß das Streufeld in den Pollücken zwischen den Einzelpolen bzw. den Magnetsegmenten eine bei Drehung des Rotors zahn- bzw. nutfrequente Pulsation in der radial gerichteten Induktionsdichte aufweist, kann durch die erfindungsgemäße Vorrichtung bei einfacher und platzsparender, wie für die übrigen innerhalb des Statorgehäuses anzubringenden Bauteile vorteilhafter axialer Montagerichtung ohne Beeinträchtigung einer vorhandenen Motorfunktion und insbesondere ohne Veränderung der Motorbaugröße eine Dreherkennungs- und/oder Drehzahlerfassungsvorrichtung geschaffen werden, die gegen rauhen Betriebseinsatz, insbesondere hinsichtlich Stoß-, Verschmutzungs- und Feuchtigkeitsbelastung, weitgehend unempfindlich ist. Der Führungsnocken kann in fertigungstechnisch besonders einfacher Weise aus einer von außen in das Motorgehäuse eingeprägten, axial verlaufenden Vertiefung bestehen.

Die elektrische Kontaktierung der Meßspule mit einer Drehzahlauswerte- bzw. Drehzahlregelschaltung kann nach einer Ausgestaltung der Erfindung auf einfache Weise dadurch erfolgen, daß in dem Tragkörper zum Anschluß einer äußeren Anschlußleitung Meßspule angeschlossen ist, wobei zweckmäßigerweise die Meßspulenanschlüsse als Steckeranschlüsse ausgeführt sind, die bei der Montage des Gleichstrom-Kleinmotors mit korrespondierenden kommutatorseitigen Bürstensteckeranschlüssen kontaktierbar sind.

Die Erfindung sowie weitere vorteilhafte Ausgestaltungen der Erfindung werden im folgenden anhand eines schematisch dargestellten Ausführungsbeispieles in der Zeichnung näher erläutert; darin zeigen:

Fig. 1 einen radialen Querschnitt durch einen permanentmagentisch erregten Gleichstrom-Kleinmotor;

Fig. 2 eine Ansicht des Kunststoff-Tragkörpers in Richtung III gemäß Fig.1;

Fig. 3 eine Ansicht des Kunststoff-Tragkörpers in Richtung III gemäß Fig. 1;

Fig. 4 einen axialen Längsschnitt durch den Tragkörper gemäß Schnittverlauf IV-IV in Fig 3,

Fig. 5 den Kunststoff-Tragkörper gemäß Fig. 4 im Schnittverlauf V–V;

Fig. 6 eine zu Fig. 5 hinsichtlich der Meßspulenanordnung alternative Ausbildung des Kunststoff-Tragkörpers.

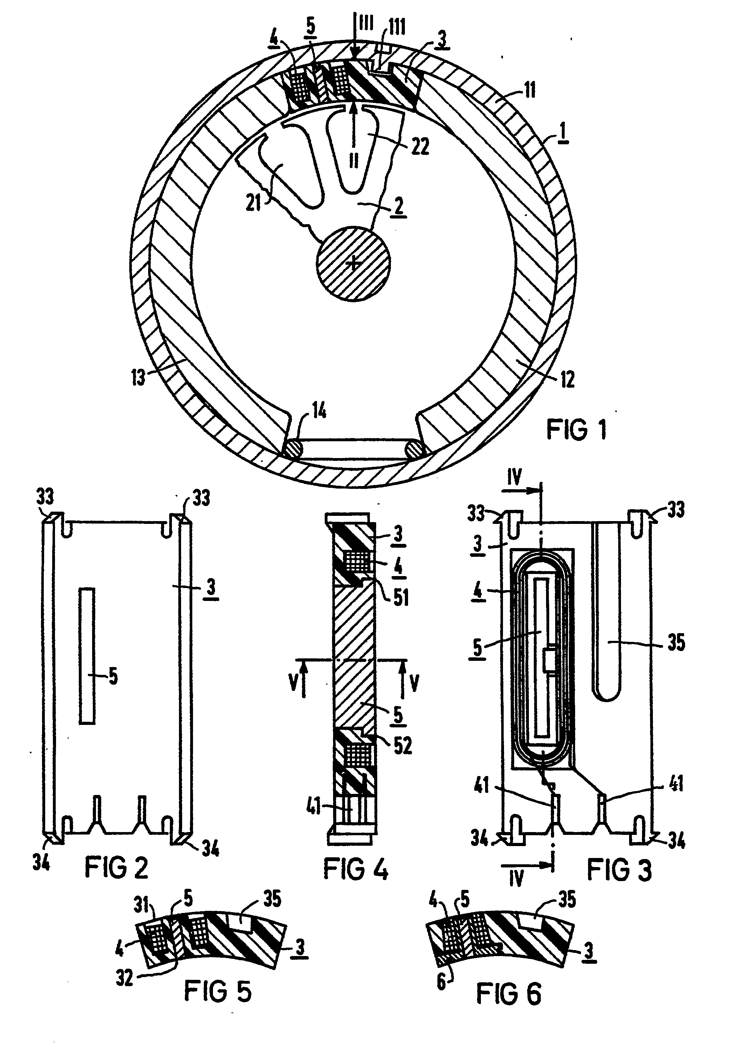

Fig. 1 zeigt einen permanetmagnetisch erregten Gleichstrom-Kleinmotor 1 mit zwei unter tangentialem Abstand an der Innenumfangsfläche eines Statorgehäuses 11 angeordneten Magnetsegmenten 12, 13 und einem hier noch unbewickelt dargestellten Rotor 2, der über den Umfang mit Nuten versehen ist, von denen im Teilauschnitt zwei Nuten 21, 22 gezeigt sind.

Die Magnetsegmente 12, 13 sind an die Innenumfangsfläche des Statorgehäuses 11 mittels einer Steckfeder 14 angedrückt, die zwischen den beiden gegenüberliegenden unteren tangentialen Stirnkanten der Magnetsegmente 12, 13 eingedrückt ist, wobei zwischen den beiden gegenüberliegenden oberen tangentialen Stirnkanten der Magnetsegmente 12, 13 der eine Meßspule 4 und einen von dieser umschlungenen Induktions-Eisenkern 5 aufnehmende Kunststoff-Tragkörper 3 eingedrückt ist.

Die Anordnung der Meßspule 4 und deren Anschluß an zwei äußere Steckanschlüsse 41, 41 ist insb. aus den Einzeldarstellungen gemäß Fig 2–6 ersichtlich. Gemäß Fig. 1–5 ist die Meßspule 4 als vorgefertigte oder in den Kunststoff-Tragkörper 3 eingewickelte Spule in einen Meßspulenschlitz 31, der als Tasche des Kunstofftragkörpers 3 ausgebildet ist, von der Oberseite des Kunststoff-Tragkörpers 3 hereingebracht. Von der Unterseite des Kunststoff-Tragkörpers 3 her ist der Induktionseisenkern 5 in eine Tasche 32 des Tragkörpers 3 eingedrückt, der zur Positionssicherung mit Rastvorsprüngen 51, 52 bei Erreichen seiner betriebsmäßigen Endlage hinter entsprechende Rastvertiefungen des Kunststoff-Tragkörpers 3 einschnappt. Die Wicklungsenden der Spule 4 sind zu in den Kunststoff-Tragkörper 3 eingegossenen Meßspulenanschlüssen 41, 41 in Form von Steckerstiften geführt und mit diesen kontaktiert; an den Kunststoff-Tragkörper 3 ist im Bereich der Meßspulenanschlüsse eine Steckerhülse einstückig angegossen, die z.B. einen mit der Bürstenbrücke des Gleichstrom-Kleinmotors integrierten Gegenstecker derart aufnimmt, daß bei der Aufbaumontage des Gleichstrom-Kleinmotors die Steckerstifte der Meßspulenanschlüsse mit den Gegensteckern der Bürstenbrücke selbsttätig kontaktierbar sind.

Fig. 6 zeigt als Alternative zu der gemäß Fig. 1 bis Fig. 5 in den Meßspulenschlitz 31 des Kunststoff-Tragkörpers 3 eingelegten bzw. eingewickelten Meßspule 4, deren Vorfertigung auf einen T-förmigen Spulenkörper 6, der dann als vorgefertigtes Einzelbauteil in eine entsprechende Öffnung des Kunststoff-Tragkörpers 3 einsteckbar und in seiner betriebsmäßigen Endlage festrastbar ist.

Zur axialen Führung und formschlüssigen tangentialen Lagesicherung ist der Kunststoff-Tragkörper 3 mit einer zur vorderen Stirnseite hin geöffneten axialen Führungsnut 35 versehen, in die beim axialen Einschieben des Kunststoff-Tragkörpers 3 in die Pollücke zwischen den beiden oberen voreinanderliegenden tangentialen Stirnseiten der Magnetsegmente 12, 13 ein korrespondierender, radial einwärts eingeprägter axialer Führungsnocken 111 des Statorgehäuses 11 eingreift. Eine zusätzliche formschlüssige axiale Positionssicherung zwischen den Magnetsegmenten 12, 13 und dem Kunststoff-Tragkörper 3 in seiner betriebsmäßigen Endlage erfolgt nach einer Ausgestaltung der Erfindung mittels endseitiger an den Kunststoff-Tragkörper 3 angegossener Rast-Schnapp-Haken 33, 33 bzw. 34, 34, die die axialen Stirnseiten der Magnetsegmente 12, 13 hintergreifen.

**Patentansprüche**

1. Dreherkennungs- und/oder Drehzahlerfassungsvorrichtung in einem permanentmagnetisch erregten Gleichstrom-Kleinmotor mit über den Bohrungsumfang des Stators unter Freilassung von Pollücken an der Innenumfangsfläche eines Statorgehäuses (11) verteilten Magnetsegmenten (12, 13) und mit einem über seinen Umfang genuteten und/oder gezahnten Rotor (2) sowie mit zumindest einer in einer Pollücke zwischen den Magnetsegmenten (12, 13) auf einem Tragkörper (3) angeordneten, durch die bei Drehung des Rotors (2) nutfrequente Pulsation des Streufeldes induzierbaren Meßspule (4), dadurch gekennzeichnet, daß die Meßspule (4) in einem zwischen den Magnetsegmenten (12, 13) gehaltenen, axial einführbaren unmagnetischen Kunststoff-Tragkörper (3) angeordnet ist und der Kunststoff-Tragkörper (3) mit zumindest einer axialen Führungsnut (35) und das Statorgehäuse (11) mit zumindest einem korrespondierenden axialen Führungsnocken (111) versehen sind.

2. Dreherkennungs- und/oder Drehzahlerfassungsvorrichtung in einem permanentmagnetisch erregten Gleichstrom-Kleinmotor mit über den Bohrungsumfang des Stators unter Freilassung von Pollücken an der Innenumfangsfläche eines Statorgehäuses (11) verteilten Magnetsegmenten (12, 13) und mit einem über seinen Umfang genuteten und/oder gezahnten Rotor (2) sowie mit zumindest einer in einer Pollücke zwischen den Magnetsegmenten (12, 13) auf einem Tragkörper (3) angeordneten, durch die bei Drehung des Rotors (2) nutfrequente Pulsation des Streufeldes induzierbaren Meßspule (4), dadurch gekennzeichnet, daß die Meßspule (4) in einem zwischen den Magnetsegmenten (12, 13) gehaltenen, axial einführbaren unmagnetischen Kunststoff-Tragkörper (3) angeordnet und der Kunststoff-Tragkörper (3) zwischen die gegenüberliegenden tangentialen Stirnseiten zweier benachbarter Magnetsegmente (12, 13) eindrückbar und/oder festklemmbar ist.

3. Dreherkennungs- und/oder Drehzahlerfassungsvorrichtung nach Anspruch 1 und/oder 2, dadurch gekennzeichnet, daß die Meßspule (4) einen Induktions-Eisenkern (5) umschlingt, dessen tangentiale Erstreckung vorzugsweise kleiner ist als die Nutschlitz- bzw. Zahnlückenbreite des genuteten bzw. gezahnten Rotors (2).

4. Dreherkennungs- und/oder Drehzahlerfassungsvorrichtung nach zumindest einem der Ansprüche 1 bis 3, dadurch gekennzeichnet, daß die Meßspule (4) und/oder der Eisenkern (5) in Taschen (31 bzw.32) des Tragkörpers (3) eingesteckt und, vorzugsweise durch einen Rastverschluß, gehalten ist.

5. Dreherkennungs- und/oder Drehzahlerfassungsvorrichtung nach zumindest einem der Ansprüche 1 bis 4, dadurch gekennzeichnet, daß in dem Kunststoff-Tragkörper (3) zum Anschluß einer äußeren Anschlußleitung Meßspulenanschlüsse (41, 42) gehalten sind, an deren inneren Enden die Meßspule (4) angeschlossen ist.

6. Dreherkennungs- und/oder Drehzahlerfassungsvorrichtung nach Anspruch 5, dadurch gekennzeichnet, daß die Meßspulenanschlüsse (41, 42) als Steckeranschlüsse bei der Montage des Gleichstrom-Kleinmotors mit korrespondierenden, kommutatorseitigen Bürstenbrücken-Gegensteckeranschlüssen kontaktierbar sind.

7. Dreherkennungs- und/oder Drehzahlerfassungsvorrichtung nach zumindest einem der Ansprüche 1 – 6, dadurch gekennzeichnet, daß der Kunststoff-Tragkörper (3) mittels endseitiger Rast-Schnapp-Haken (33, 33 bzw.34, 34) relativ zu den axialen Stirnseiten der benachbarten Magnetsegmente (12, 13) axial fixierbar ist.

## Revendications

1. Dispositif de détection d'une rotation et/ou de détermination d'une vitesse de rotation dans un petit moteur à courant continu excité au moyen d'aimants permanents et comportant des segments d'aimants (12, 13) répartis sur le pourtour du perçage du stator, tout en laissant subsister des intervalles entre pôles au niveau de la surface périphérique intérieure d'un carter (11) du stator, et un rotor (2) comportant des encoches et/ou des dents sur son pourtour, ainsi qu'au moins une bobine de mesure (4) disposée sur un support (3) dans un espace entre pôles, entre les segments d'aimants (12, 13), et à laquelle une induction peut être appliquée par la pulsation fréquence du champ de fuite, qui possède la fréquence des encoches lorsque le rotor (2) tourne, caractérisé par le fait que la bobine de mesure (4) est disposée dans un support amagnétique en matière plastique (3), qui est maintenu entre les segments d'aimants (12, 13) et peut être inséré axialement, et que le support en matière plastique (3) comporte au moins une rainure axiale de guidage (35) et le carter (11) du stator comporte au moins une nervure axiale de guidage correspondante (111).

2. Dispositif de détection d'une rotation et/ou de détermination d'une vitesse de rotation dans un petit moteur à courant continu excité au moyen d'aimants permanents et comportant des segments d'aimants (12, 13) répartis sur le pourtour du perçage du stator, tout en laissant subsister des intervalles entre pôles au niveau de la surface périphérique intérieure d'un carter (11) du stator, et un rotor (2) comportant des encoches et/ou des dents sur son pourtour, ainsi qu'au moins une bobine de mesure (4) disposée sur un support (3) dans un espace entre pôles, entre les segments d'aimants (12, 13), et à laquelle une induction peut être appliquée par la pulsation fréquence du champ de fuite, qui possède la fréquence des encoches lorsque le rotor (2) tourne, caractérisé par le fait que la bobine de mesure est disposée dans un support amagnétique en matière plastique (3), qui est maintenu entre les segments d'aimants (12, 13) et peut être inséré axialement, et que le support en matière plastique (3) peut être inséré à force et/ou bloqué entre les faces frontalles tangentielles, situées en vis-à-vis, de deux segments d'aimants voisins (12, 13).

3. Dispositif de détection d'une rotation et/ou de détermination d'une vitesse de rotation suivant la revendication 1 et/ou 2, caractérisé par le fait que la bobine de mesure (4) entoure un noyau de fer inducteur (5), dont l'étendue tangentielle est de préférence inférieure à la largeur de la fente utile ou de l'entre-dents du rotor (2) comportant des encoches ou des dents.

4. Dispositif de détection d'une rotation et/ou de détermination d'une vitesse de rotation suivant au moins l'une des revendications 1 à 3, caractérisé par le fait que la bobine de mesure (4) et/ou le noyau de fer (5) sont enfichés dans des logements (31 ou 32) du support (3) et maintenus de préférence au moyen d'un système de fermeture à encliquetage.

5. Dispositif de détection d'une rotation et/ou de détermination d'une vitesse de rotation suivant au moins l'une des revendications 1 à 4, caractérisé par le fait que des bornes (41, 42) de la bobine de mesure, à des extrémités intérieures desquelles est raccordée la bobine de mesure (4), sont maintenues dans le support en matière plastique (3) pour le raccordement d'un conducteur extérieur de raccordement.

6. Dispositif d'identification d'une rotation et/ou de détermination d'une vitesse de rotation suivant la revendication 5, caractérisé par le fait que les bornes (41, 42) de la bobine de mesure constituant des bornes d'enfichage peuvent être placées en contact, lors du montage du petit moteur à courant continu, avec des bornes antagonistes correspondantes d'enfichage d'un porte-balais, situes du côté du collecteur.

7. Dispositif de détection d'une rotation et/ou de détermination d'une vitesse de rotation suivant l'une des revendicatins 1–6, caractérisé par le fait que le support en matière plastique (3) peut être fixé axialement au moyen de crochets à encliquetage brusque (33, 33 ou 34, 34), situés aux extrémités du corps, par rapport aux faces frontales axiales des segments d'aimants voisins (12, 13).

## Claims

1. A rotary recognition and/or rotational speed detecting device in a permanent magnetically excited direct-current fractional horsepower motor with magnetic segments (12, 13) distributed along the bore circumference of the stator with pole gaps left free on the inner circumferential face of a stator housing (11) and with a rotor (2) grooved and/or toothed along its circumference as well as with at least one measuring coil (4) able to be induced by the groove-frequent pulsation of the stray field when rotating the rotor (2) and arranged in a pole gap between the magnetic segments (12, 13) on a carrying body (3), characterised in that the measuring coil (4) is arranged in a non-magnetic plastic carrying body (3) axially introduced and held between the magnetic segments (12, 13), and the plastic carrying body (3) is provided with at least one axial guidance groove (35) and the motor housing (11) is provided with at least one corresponding axial guiding cam (111).

2. A rotary recognition and/or rotational speed detecting device in a permanent magnetically excited direct-current fractional horsepower motor with magnetic segments (12, 13) distributed along the bore circumference of the stator with pole gaps left free on the inner circumferential face of a stator housing (11) and with a rotor (2) grooved and/or toothed along its circumference as well as at least one measuring coil (4) able to be induced by the groove-frequent pulsation of the stray field when rotating the rotor (2) and arranged in a pole gap between the magnetic segments (12, 13) on a carrying body (3), characterised in that the measuring coil (4) is arranged in an non-magnetic plastic carrying body (3) axially introduced and held between the magnetic segments (12, 13), and the plastic carrying body (3) is able to be pressed and/or firmly clamped between the two tangential opposing end sides of two adjacent magnetic segments (12, 13).

3. A rotary recognition and/or rotational speed detecting device according to claim 1 and/or 2, characterised in that the measuring coil (4) surrounds an induction iron core (5), the tangential extent of which is preferably smaller than the groove slot or tooth gap width of the grooved or toothed rotor (2).

4. A rotary recognition and/or rotational speed detecting device according to at least one of claims 1 to 3, characterised in that the measuring coil (4) and/or iron core (5) is inserted into pockets (31 or 32) of the carrying body (3) and is preferably held by a locking seal.

5. A rotary recognition and/or rotational speed detection device according to one of claims 1 to 4, characterised in that, in the plastic carrying body (3), for connecting an external connecting line, there are held measuring coil connections (41, 42), attached to the inner ends of which is the measuring coil (4).

6. A rotary recognition and/or rotational speed detecting device according to claim 5, characterised in that the measuring coil connections (41, 42) are able to be contacted as plug connections with the assembly of the direct-current fractional horsepower motor with corresponding commutator side brush bridge counter plug connections.

7. A rotary recognition and/or rotational speed detection device according to at least one of claims 1-6, characterised in that the plastic carrying body (3) is able to be fixed axially relative to the axial end sides of the adjacent magnetic segments (12, 13) by means of end side locking snap hooks (33, 33 or 34, 34).

FIG 1

FIG 2

FIG 4

FIG 3

FIG 5

FIG 6